# EUROPEAN PATENT SPECIFICATION

(11) **EP 0 634 580 B1**
(45) Date of publication and mention of the grant of the patent: **21.01.1998**
(21) Application number: 93202055.5
(22) Date of filing: 12.07.1993
(51) Int. Cl.: F16B 5/07, F16B 5/00

(54) **Plate assembly and assembling method**
Verbindungsanordnung zwischen Platten sowie Verbindungsverfahren
Ensemble de plaques et procédé d'assemblage

(43) Date of publication of application: 18.01.1995
(73) Proprietor: AGFA-GEVAERT N.V., 2640 Mortsel (BE)
(72) Inventor: Bogaerts, Constant c/o Agfa-Gevaert N.V., B-2640 Mortsel (BE); Van Echelpoel, Eric c/o Agfa-Gevaert N.V., B-2640 Mortsel (BE); Goossen, Henri c/o Agfa-Gevaert N.V., B-2640 Mortsel (BE); Van Goethem, Luc c/o Agfa-Gevaert N.V., B-2640 Mortsel (BE); Van Aken, Luc c/o Agfa-Gevaert N.V., B-2640 Mortsel (BE)

(56) References cited:
- DE-C- 1 134 557
- DE-U- 8 805 874
- FR-A- 2 330 903
- US-A- 4 535 704
- US-A- 4 874 148

## Description

### FIELD OF THE INVENTION

This invention relates to a panel assembly and a mechanical assembling method used therefor, particularly suitable for application in apparatus.

### BACKGROUND OF THE INVENTION

Most apparatus as e.g. a photographic camera, a processor for exposed materials, an optoelectronic scanner, a xerographic copier, a thermal printer, are mounted within a generally rectangular housing, which may include a rectangular metal frame for supporting various parts of the apparatus.

In many of these apparatus, the mechanical geometry of the frame panels, especially the relative distance between them, is very important for guaranteeing a qualitative and reliable operation of said apparatus.

The frame of the apparatus thus has to be designed and manufactured within rather small and robust tolerances, thereby minimising the creation of disturbing splits between said panels. Thereabove the frame thus formed needs a geometry which requires no adjustment after it has been assembled and which is stable in time.

In one prior art, precise positioning and fastening of two panels in an apparatus was generally accomplished in a rather complicated way, including crossbars with manually adjustable lengths or with fixed high precision manufactured lenghts.

In another prior art, in order to save mounting time, screw receptacles were used as disclosed in USP 3,967,432 and as in "Research Disclosure" no 34449 (December 1992). However, even with these techniques, supplementary positioning means are still needed for assembling the panels, thus requiring unevitable material costs. Thereabove, this second prior art does not guarantee high geometrical precision in the positions of said panels.

US-A-4 535 704 discloses a panel assembly in which tabs on one panel extend through slots in the other panel, a shoulder at one side of each tab providing support.

### OBJECT OF THE INVENTION

Accordingly it is an object of the present invention to provide an improved assembly of a first panel with another panel in a well defined geometrical relationship such that the distance between said panels is correct in at least one direction, and this without the use of supplementary positioning means, or of complicated machining. The improvement mainly consists in attaining a precise and stable geometry for said assembly by money saving manufacturing and mounting techniques.

These and other objects of the invention will become apparent from the following description.

### SUMMARY OF THE INVENTION

We now have found that the above objects can be achieved by providing an assembly recording to claim 1.

According to a preferred embodiment of the present invention, said second panel further is provided with at least one angled portion partially surrounding said projecting tab, and wherein said second panel is fixed to said first panel by fastening means engaging said angled portion and said first panel.

Further embodiments of the present invention are set forth in the detailed description given hereinbelow.

### DETAILED DESCRIPTION OF THE INVENTION

The invention will be described with reference to the accompanying drawings without limiting the invention thereto, in which:
Fig. 1 is a schematic view of an apparatus with a frame which comprises panels;
Fig. 2 is a fragmentary perspective view of an assembly according to the present invention;
Fig. 3 gives a partial view and a partial section of an assembly of two panels according to the present invention wherein the distance between said panels is correct in one dimension;
Fig. 4 is a further embodiment of the present invention comprising two projection tabs in a same plane;
Fig. 5 is an overview of possible crosssections of an insertion slot according to the present invention;
Fig. 6 is a partial view of an assembly of two panels according to the present invention wherein the distances between said panels are correct in two dimensions;
Fig. 7 is a partial view of an assembly of two panels according to the present invention wherein the distances between said panels are correct in three dimensions;
Fig. 8 is a partial elevation of a second panel comprising an interconnection element carried out as an integrated angled portion;
Fig. 9 is an alternative assembly, not according to the present invention, with a non-perpendicular bending angle β;
Fig. 10 is an alternative assembly, not according to the present invention, comprising resilient material and fastening means;
Fig. 11 is an alternative assembly, not according to the present invention, arranged for mounting a third panel;
Fig. 12 is a schematic view of two distinctive assemblies mounted under an exemplary mounting angle µ;
Fig. 13 gives two partial plan views of two types of a second panel;
Fig. 14 is a longitudinal side view of an apparatus comprising a plurality of assemblies in accordance with the present invention.

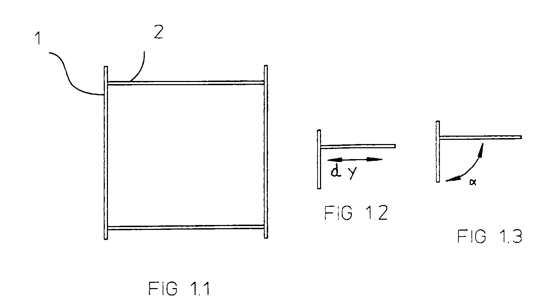

Reference is firstly made to Fig 1, in which there is illustrated a schematic side view of an apparatus with a frame comprising panels 1 and 2 which may suitably be steel plates or the like.

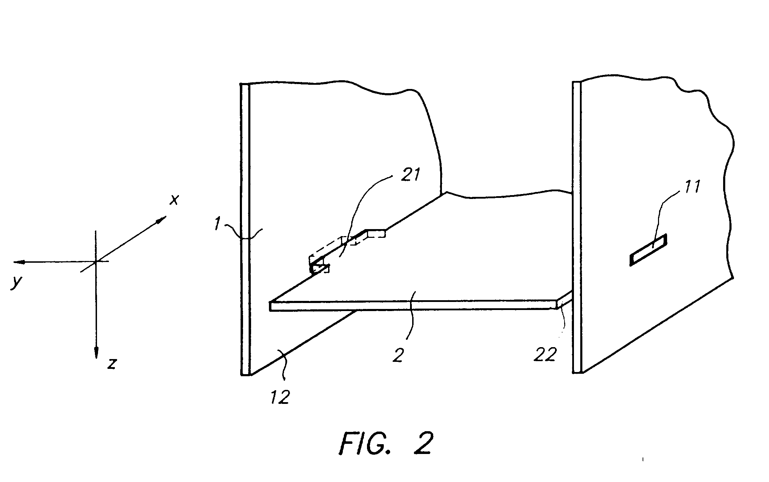

A possible set of such panels is illustrated in a fragmentary perspective view of Fig. 2, which figure at this instance is restrictively intended for introducing some specific terms in relation to the detailed description which follows.

In this Fig. 2, indicated are a rectangular coordinate system having a X, a Y and a Z axis, a first panel 1 and a second panel 2. The first panel 1 has a slot 11 and a supporting plane 12. The second panel 2 has a projecting lip or tab 21 extending outwardly from one edge 22 thereof.
The complementary shapes of panels 1 and 2 permit their assembly in an exact position and holding in position before their optional final fastening together by fastening means.
In order to attain a correct distance (indicated in Y-direction as y_{d} in Fig. 1) between both vertical panels, the assembly evidently may be applied twice, namely at both ends of the horizontal panel 2, more specifically, once at he left side of panel 2 and once at the right side of panel 2. Further details will be explained in separate paragraphs and in reference to more detailed drawings.

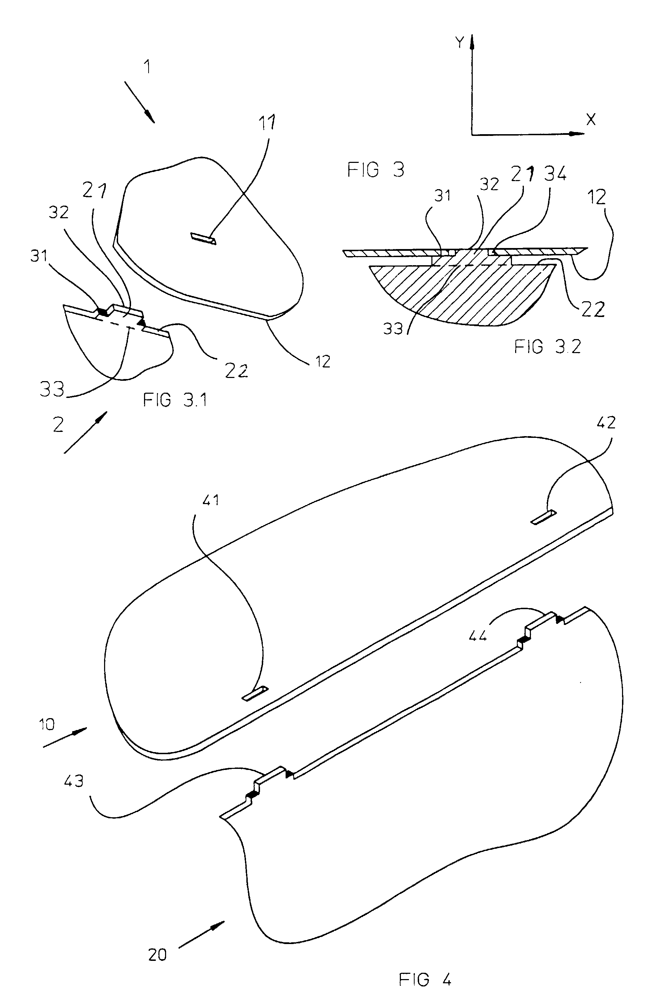

Referrence is made now to figure 3, comprising Figs. 3.1 and 3.2, which illustrates a first embodiment of the present invention with an assembly of two panels 1 and 2, wherein panel 1 comprises at least one insertion slot 11 and the other panel 2 comprises at least one projecting tab 21 extending outwardly from one edge 22 thereof and fitting in said slot 11. As seen in Fig. 3, projecting tab 21 has two shoulder edges 31 located between the end edge or "the top" 32 and the base 33 of tab 21, and panel 1 abuts by its supporting plane 12 on shoulder edge 31 of panel 2, as the projection tab 21 is pushed into the insertion slot 11. Herewith said one edge 22 of second panel 2 remains out of contact with said first panel 1.

The height of the projecting tab 21, defined by the Z-distance between the top 32 and the base 33 of the tab 21, is equal to the height of the shoulder and the thickness of panel 1, so that it will be flush with the other side of panel 1.

In order to facilitate the introduction of said tab 21 into said slot 11, the end edge of said tab 21 may be chamfered or tapered (not shown).

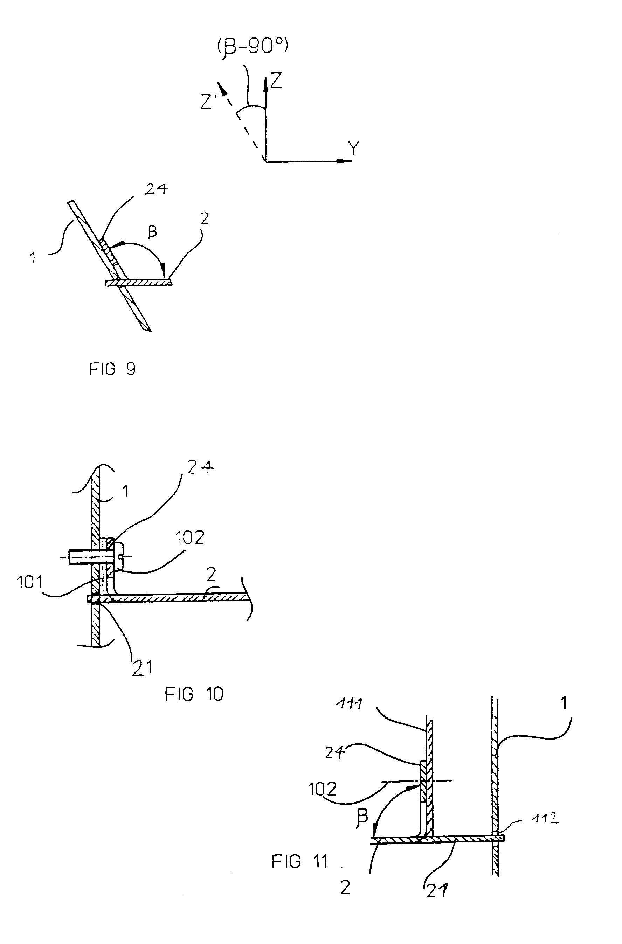

In order to attain a precise position of panel 2 with respect to panel 1 in the direction of the Y axis, being normal to the surface of shoulder 31, in most of the prior art, the machining tolerances of the panels are rather narrow. It is a surprising advantage of the present invention, that even with rather broad tolerances of the individual panels 1, 2 still a high end accuracy of the total frame may be achieved. Indeed, it is only required for panel 2 that the shoulders 31 (intentionally shadowed in full black in Figs. 3, 6, 7 and 8) should be punched with sufficient accuracy. The remaining faces which have no abutment nor positioning function (as e. g. the top 32) may be of a normal precision as it results from usual punching tolerances. For panel 1, it is required that the "X-length" (representing the dimension in a direction according to the X axis) of opening 11 and the "Z-width" (representing the dimension in a direction according to the Z axis) of same opening 11 are not smaller as the respective X-length and Z-width of the corresponding tab(s) 21 (see clearances 34 in the X direction indicated in Figs. 3 and 6, and clearances 112 in the Z direction as indicated in Fig. 11).

In the case of a perpendicular engagement between panels 1 and 2 (as already illustrated in Figs. 1, 2 and 3), the prior state of the art usually bends an angled portion or a flange at the Y-directed edge 22 of panel 2. Said flange then generally serves to make an abutting contact between panels 1 and 2, when fastened by e.g. a bolt connection. The prior art bending of panel 2 in order to make said flange, inherently causes bending tolerances, which are standardised in e.g. the german DIN 6930. The present invention does not use any bending for abutting panels 1 and 2, but mainly uses a punching or cutting operation with inherent punching tolerances. Generally, these punching tolerances are about two times smaller as correspondent bending tolerances (for the same materials, thicknesses and lengths); which may be consultated in DIN 6930, especially part II. Herefrom it results that the assembly according to the present invention has much better positioning tolerances as the prior art. Hence, the distance between said panels 1 and 2 is correct in at least the Y-direction, and this without the use of supplementary positioning means, or of complicated machining.

It may be clear that the disclosed assembly provides a simple construction which enables to be positioned in a predictable position, despite variations in the thicknesses of said panels.

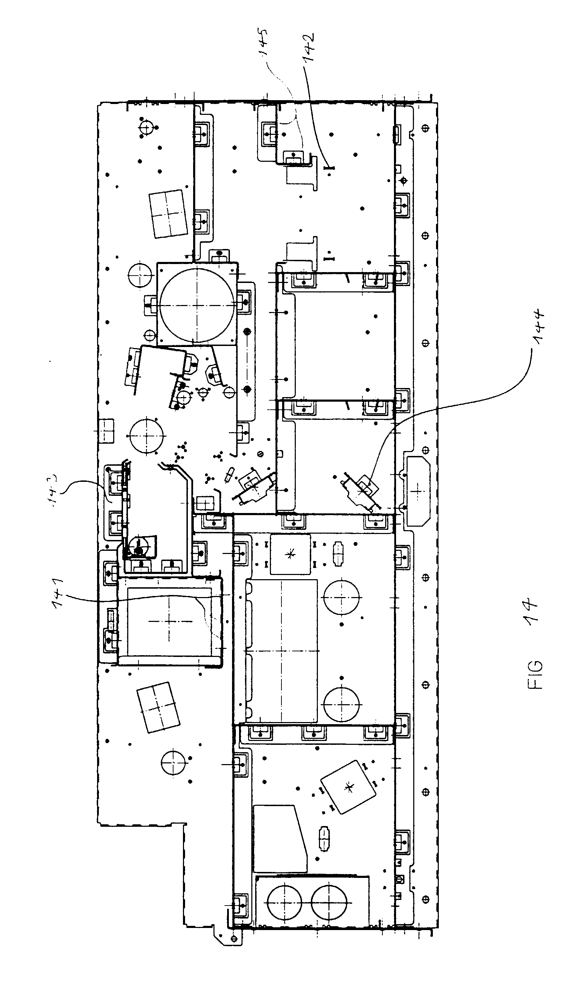

From the foregoing teachings, it will be clear that the disclosure of the present invention may be applied in frame edges (as suggested by the introductory Fig. 1), but also at intermediate positions, at some distance within said panel 1 (which will be illustrated in Fig. 14, to be described further on).

It may be clear that in practice a panel 2 may have more than one tab 21. Especially if the panels 1 and 2 are rather great, it is often advantageous, in order to align both panels precisely over their total length, to use several sets of cooperating tabs and slots.

Fig. 4 illustrates two tabs 43 and 44 lying substantially in a same plane of a second panel and a first panel 1 which accordingly comprises corresponding insertion slots 41 and 42.

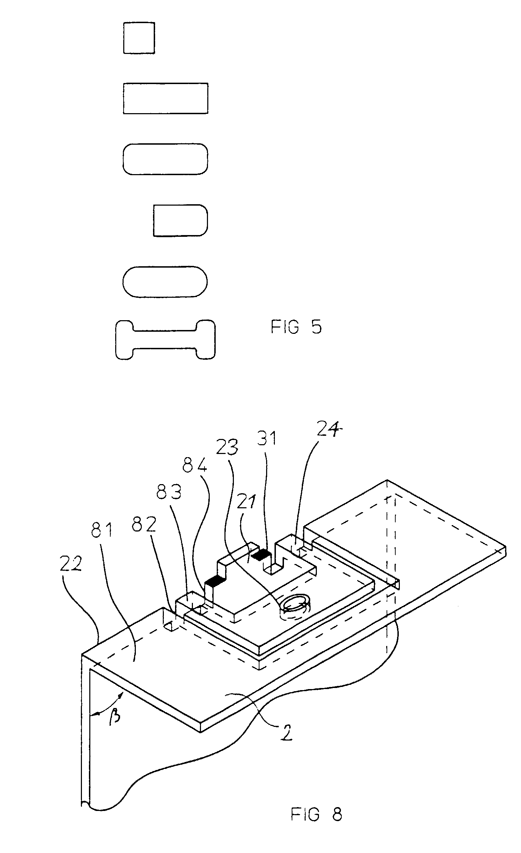

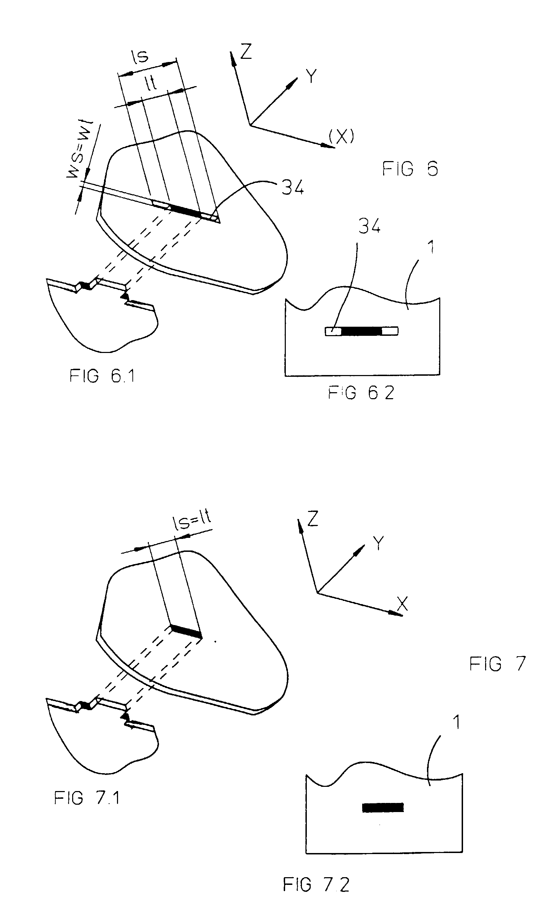

In a preferred embodiment of the present invention, the crosssectional shape of said tab corresponds generally with the shape of said slot. Preferably, said tab is located in the plane of said second panel 2. Generally, both cross-sections may have a rectangular or a non rectangular corresponding shape of which Fig. 5 gives an overview. These possible cross-sections of an insertion slot according to the present invention can guarantee a correct positional accuracy, as it will be clear from the further disclosure of the present invention.

In order to attain also a precise position of panel 2 to panel 1 as regarding the distances in the dimensions of the Y axis and also of the Z axis, Fig. 6 illustrates a further embodiment of the present invention. Herein the slot width wₛ is punched with high precision and thus narrow width tolerances, so that the projecting tab 21 and the slot 11 may be fitted without any clearances in the Z direction.

In order to understrike these important relations, in Fig. 6 is expressively indicated that the X-length of the insertion slot lₛ is principaly greater than the length of the tab lₜ (lₛ > lₜ), whereas the Z-width of the slot wₛ is princippally equal to the width of the tab wₜ (wₛ = wₜ).
For a good understanding, it is understriked again that the present invention does not suffer from any bending tolerances. Herefrom it follows, that after assembling 1 and 2 together according to Fig. 6, as well their relative Y positions as well as their relative Z positions are very exact, even after several assemblings and dissasemblings.

In order to attain also a precise position of panel 2 to panel 1 as regarding the distances in the dimensions of the Y axis, of the Z axis, and of the X axis, Fig. 7 illustrates a further embodiment of the present invention. Herein the slot length lₛ is punched with high precision and thus narrow length tolerances, so that the projecting tab 21 and the slot 11 may be fitted without any clearances in the X direction, and so that lₛ = lₜ. Herefrom it follows, that after assembling 1 and 2 together according to Fig. 7, as the arrangement is devoid of any disturbing gap between them, their relative X, Y and Z positions are all very exact, even after occasionally several assemblings and dissasemblings.

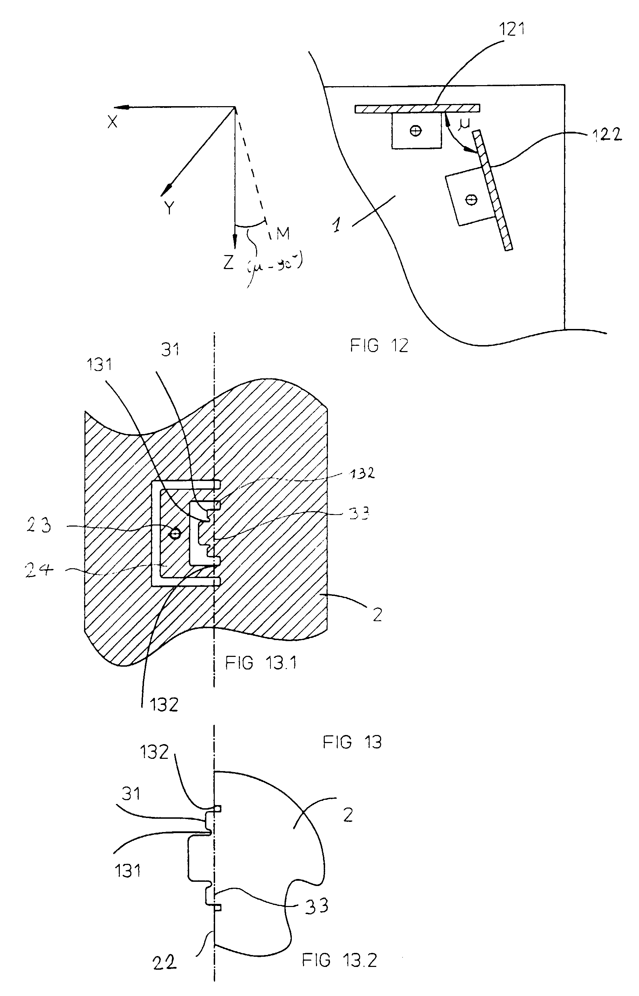

Remembering the objects of the invention, optionally the high precision punching of 1 and 2 as illustrated in Fig. 7, respecting all 3 dimensions X-Y-Z, could be replaced by a more economical use of two separate assemblies (as will be disclosed further in reference to Fig. 12).

Now that the distance of both panels 1 and 2 is already cleared, at least in one direction as e.g. the Y direction, further attention is directed to the angular position of said both panels.

Therefore, according to the present invention, at least one interconnection element for interconnecting panel 2 to panel 1 is proposed, which may be a separate interconnection element (possibly riveted onto panel 2) or which may be an integrated portion of panel 2. More practically, in Fig. 8, is illustrated a partial elevation of a panel 2 according to a preferred embodiment, provided with at least one said interconnection element, intended for later interconnecting panel 2 to panel 1.

In a preferred embodiment, said interconnection element of panel 2 preferably is an integrated angled portion 24, partially surrounding said projecting tab 21, and laying slightly below the shoulder edge 31, e. g. some 0.3 mm, so that it does not make any contact with panel 1, at least as long as it is not fixed or secured by any fastening means (to be described further on).

More specifically, said second panel 2 comprises an outer spigot plane 81, an outer peripheral recess 82, an angled portion 24 connected to said second panel 2 by at least one tongue 83, an inner recess 84 and the already described projecting tab 21.

Remembering the objects of the invention, it is very important to understrike once again the fact that the geometrical precision of the assembly according to Fig. 8 is not restricted by bending techniques (e.g. for realising angled portion 24), but is essentially given by punching techniques (cfr. shoulder edge on projecting tab). Thereabove, the spigot plane 81 of panel 2, which also may be realised by usual bending techniques, does not contact panel 1 and hence does not affect the positional precision of both panels. Nevertheless, said spigot plane 81 really gives a higher stiffness to panel 2, such that the original geometrical precision definitely remains stable during the lifetime of said apparatus.

As already indicated in Fig. 1, the assembly according to the present invention preferably has said two panels 1 and 2 at a right angle α to each other. But, in Fig. 9, panel 2 comprises an angled portion 24 under a bending angle β for supporting first panel 1. In practice, said angle β is between 70° and 110°, preferably 90°.
If β is not 90°, any vertical position on the inclined panel 1 evidently has to be calculated with the aid of apt goniometric relations, as e.g. Z = Z'. cos |B - 90°|

When comparing the initial Fig. 1 and the just described Fig. 9, it is quite evident that, in simpler cases, α generally equals β. However, this is not systematically true, because different combinations can be made very well.

In a further preferred embodiment of the present invention, the assembly further comprises at least one fastening means for securing said panels 1, 2 to each other and to inhibit relative movement of the plates (not shown separately). Indeed, although the projecting tabs 21 engage tightly into the insertion slots 11, both panels have to be held in correct and fixed operative engagement. In first instance, said fastening means may be removable, as e.g if formed by a bolt and a nut, by means of self tapping screws, by an anchorage with threads (defined in DIN 7952) or by a screw and a screw receptable (as defined earlier in the background of the invention). In second instance, said fastening means may be not removable, as e.g. if provided by a poprivet, a spotweld or some glue. Evidently, in the situation of fastening by spotwelding or by glueing, no fastening holes (as indicated by referal 23 in Fig. 8) are required, neither in panel 1, nor in panel 2.

It is of great interest to understrike that the angled portion 24 is laying below the shoulder edge 31, so that it does not really make contact with the first panel 1 as long as panels 1 and 2 are just mounted without any fastening means.
In case a fastening means is introduced, angled portion 24 may be pulled towards the first panel 1. Yet, this does not influence the relative Y distance, which is defined solely by the abutment of the shoulder edge 31 to the supporting plane of panel 1.
In order to make said contact, said angled portion 24 clearly has to be bended towards panel 1, which my be provided by the pulling forces exerted by said removable or non removable fastening means. If the panel 2 would have a relative big thickness, such that bending of said angled portion 24 would be rather difficult, a solution may be given hereto by providing a proportionally small tongue 83 (see Fig. 8), which indeed does deform more easily.

In a modified assembly, another approach to this bending difficulty could be given by putting a resilient material or some glue at the outside of the contacting plane. In either of these cases, the distance between angled portion 24 and the panel 1 can be easily bridged, without requiring any exorbitant pulling forces. Fig. 10 shows an alternative assembly comprising a resilient material 101 and a fastening means 102.

In a further preferred embodiment of the present invention, an assembly is made comprising a second panel with two tabs, one in a same plane of said second panel and one with an angled portion (not shown separately).

In Fig. 11 is illustrated an alternative assembly, wherein said panel 2 is provided with at least one angled portion 24, partially surrounding said projecting tab 21, laying rather far below the shoulder edge 31, e. g. some mm, for supporting said first panel 1 or even a third panel 111.
In the case illustrated by Fig. 11, the assembly generally further may comprise a supplementary fastening means 102 for securing at least two of said panels (1, 2 and 111) to each other. Such assembly as indicated by Fig. 11 may advantageously be applied in outside covering panels (e.g. referal 1) of an apparatus, whenever an operator does not want to be disturbed by any perceived fastening means, e.g. by esthetical reasons. This might be accomplished by mounting said fastening means 102 in a hidden panel 111.

It is recapitulated that optionally said angled portion 24 may have a bending angle β between 70° and 110°, preferably 90°.

In four further assemblies, a combination may be made of Figs. 9 and 10, 9 and 11, 10 and 11 or 9, 10 and 11 (not shown separately).

In Fig. 9, the individual panels 1, 2 and 111 are not restricted to strict vertical nor strict horizontal positions.

Use may be made of at least two distinct assemblies mounted under a relative mounting angle µ being perpendicular or not perpendicular as illustrated by Fig. 12. Such embodiment with µ being substantially not perpendicular may advantageously be applied in optical lightshafts, in papertrays, in inclined keypanels, etc.

In order to calculate the spatial positions of different elements, one has to apply the apt goniometric relations. For example, if the axis-system is situated as indicated in Fig. 12, for panel 121 no corrections are necessary, but for panel 122 e.g.
Z= M. cos|µ - 90°|and X= M. sin|µ - 90°|.

Optionally the use of two such separate assemblies with µ intentionally being 90° also can replace the above mentioned high precision punching of panels 1 and 2 respecting all three dimensions X-Y-Z, as illustrated in Fig. 7. In other words, the use of two second panels 121 and 122 (as illustrated in Fig. 12) with standard precision and mounted under an angle µ = 90° may be more economical than the use of one second panel 2 with high precision punching.

Recalling the objects of the invention, it is very important to understrike the fact that the geometrical precision of the assembly is essentially given by punching techniques (cfr. shoulder edge 31 on projecting tab 21). In addition, the base line 33 of the tab or edge 22 of panel 2 essentially does not contact panel 1 and hence does not affect the positional precision of the panels.

Fig. 13, comprising Figs. 13.1 and 13.2, shows some plan views of the second panel 2, both situated after punching, with or without a fastening hole 23, and before any possible bending is applied. It is noted that panel 2 may have a first undercut or recess 131 to facilitate a precise shoulder and a second undercut or recess 132 to facilitate the bending of the angled portion 24.

Fig. 14 is a side view of a practical apparatus and incorporates many of the abovementioned assemblies, some of which now are recapitulated. Referal 141 indicates an assembly comprising three projection tabs (cfr. Fig. 4); referal 142 indicates a non rectangular cross section of an insertion slot (cfr. Fig. 5); referal 143 indicates the integration of two panel elements 2 in one body; referal 144 indicates an angled position of one panels (cfr. Fig. 12); referal 145 indicates an relative mounting angle µ = 90° of two panels (cfr. Fig. 12), etc.

After receiving the teachings of the present disclosure, various modifications will be possible for those skilled in the art without departing from the scope thereof as defined by the claims.

It will be understood that the manufacturing of the plates, in particular of the co-operating tabs and openings, can also be carried out by other techniques than punching or diestamping, e.g. by lasercutting. The final precision of the assembly will depend on the manufacturing tolerances of such other technique.

Preferably, said panels 1 and 2 are made from sheet steel which has been punched to obtain the correct tab and slot configurations. But, the same concept may be applied to some plastic materials (as e.g. tradenames Lexan, Makrolon and Perspex ).

Thereabove, the punching or lasercutting operation may optionally be replaced by other manufacturing operations, such as injection moulding.

## Claims

1. A panel assembly comprising a first panel (1), having at least one insertion slot (11), and a second panel (2) having at least one projecting tab (21) projecting outwardly from at least one edge (22) thereof to terminate in a free end (32) and fitting into said insertion slot, said one edge of the second panel being maintained out of contact with said first panel, said tab including shoulders (31) located between said free end of the tab and said one edge of said second panel, said shoulder defining a generally straight and perpendicular shoulder edge on each of two opposite sides of said projecting tab, which edge is in abutting contact with said first panel, said first panel having one face (12) in said abutment with said shoulder edges of said second panel and an opposite face remote from said shoulder edges, and said free end (32) of said projecting tab on said second panel is substantially flush with said opposite face of said second panel.

2. An assembly according to claim 1, wherein the cross sectional shape of said projecting tab (21) corresponds generally with the shape of said insertion slot (11).

3. An assembly according to claim 1 or 2, wherein said second panel has at least two projecting tabs (43, 44) lying substantially in a same plane and wherein said first panel has corresponding insertion slots (41, 42) therein for reception of said at least two tabs.

4. An assembly according to any of the preceding claims, wherein said second panel (2) is provided with at least one interconnection element for mechanially attaching said second panel (2) to said first panel (1).

5. An assembly according to claim 4, wherein said interconnection element comprises an angled portion (24) of said second panel (2) partially surrounding said projecting tab (21).

6. An assembly according to claim 5, wherein said second panel (2) is attached to said first panel (1) by fastening means (102) engaging the angled portion (24) and said first panel (1).

7. An assembly according to any of the preceding claims, wherein said panels (1, 2) are made from sheet metal which has been punched to obtain the correct tab and slot configurations.

8. An assembly according to claim 6, wherein a portion of said second panel has been cut and bent out of the plane thereof to form said angled portion.

9. An assembly according to claim 5, further comprising a resilient material (101) located between said first panel (1) and the angled portion (24) of said second panel (2).

## Patentansprüche

1. Eine Verbindungsanordnung zwischen Paneelen, die ein erstes Paneel (1) mit wenigstens einem Einsteckschlitz (11) und ein zweites Paneel (2) mit wenigstens einem herausragenden Vorsprung (21) umfaßt, wobei der Vorsprung von wenigstens einem Rand (22) letzteren Paneels her nach außen herausragt, durch ein freies Ende (32) begrenzt wird und in den Einsteckschlitz eingeschoben wird, und der Rand (22) des zweiten Paneels außer Kontakt mit dem ersten Paneel gehalten wird, wobei der Vorsprung zwischen dem freien Ende des Vorsprungs und dem Rand des zweiten Paneels befindliche Schultern (31) umfaßt und jede Schulter auf jeder der zwei gegenüberliegenden Seiten des herausragenden Vorsprungs einen im allgemeinen rechten und senkrechten Schulterrand ausbildet, wobei dieser Rand an das erste Paneel anliegt und das erste Paneel eine Seite (12) in angrenzendem Kontakt mit den Schulterrändern des zweiten Paneels und eine gegenüberliegende, von den Schulterrändern entfernt liegende Seite umfaßt, und wobei das freie Ende (32) des herausragenden Vorsprungs auf dem zweiten Paneel wesentlich in einer gleichen Ebene mit der gegenüberliegenden Seite des ersten Paneels liegt.

2. Eine Anordnung nach Anspruch 1, dadurch gekennzeichnet, daß die Querschnittsform des herausragenden Vorsprungs (21) im allgemeinen der Form des Einsteckschlitzes (11) entspricht.

3. Eine Anordnung nach Anspruch 1 oder 2, dadurch gekennzeichnet, daß das zweite Paneel wenigstens zwei herausragende, wesentlich in einer gleichen Ebene liegende Vorsprünge (43, 44) und das erste Paneel entsprechende, die wenigstens zwei Vorsprünge enthaltende Einsteckschlitze (41, 42) umfaßt.

4. Eine Anordnung nach irgendeinem der vorstehenden Ansprüche, dadurch gekennzeichnet, daß das zweite Paneel (2) mit wenigstens einem Verbindungselement versehen ist, mit dem das zweite Paneel (2) am ersten Paneel (1) befestigt wird.

5. Eine Anordnung nach Anspruch 4, dadurch gekennzeichnet, daß das Verbindungselement einen den herausragenden Vorsprung (21) teilweise umringenden Winkelteil (24) des zweiten Paneels enthält.

6. Eine Anordnung nach Anspruch 5, dadurch gekennzeichnet, daß das zweite Paneel (2) durch Einstecken des Befestigungsmittels (102) in den Winkelteil (24) und das erste Paneel (1) am ersten Paneel (1) befestigt wird.

7. Eine Anordnung nach irgendeinem der vorstehenden Ansprüche, dadurch gekennzeichnet, daß die Paneele (1, 2) aus Blattmetall hergestellt sind, das zum Erhalt der korrekten Vorsprung- und Schlitzstruktur ausgestanzt ist.

8. Eine Anordnung nach Anspruch 6, dadurch gekennzeichnet, daß ein Teil des zweiten Paneels abgeschnitten und von diesem Paneel weg gebogen ist, um den Winkelteil zu bilden.

9. Eine Anordnung nach Anspruch 5, das weiterhin ein zwischen dem ersten Paneel (1) und dem Winkelteil (24) des zweiten Paneels (2) befindliches, biegsames Material (101) enthält.

## Revendications

1. Assemblage de panneaux comprenant un premier panneau (1) comportant au moins une fente d'insertion (11) et un second panneau (2) comportant au moins une patte saillante (21) faisant saillie vers l'extérieur par rapport à au moins un de ses bords (22) pour se terminer en une extrémité libre (32) et conçue pour venir s'insérer dans ladite fente d'insertion, ledit bord du second panneau étant maintenu à l'écart dudit premier panneau, ladite patte englobant des épaulements (31) situés entre ladite extrémité libre de la patte et ledit bord dudit second panneau, ledit épaulement définissant un bord d'épaulement généralement rectiligne et perpendiculaire sur chacun des deux côtés opposés de ladite patte saillante, ledit bord venant se mettre en contact jointif avec ledit premier panneau, ledit premier panneau comportant une face (12) concernée par la mise en contact jointif avec lesdits bords d'épaulements dudit second panneau et une face opposée éloignée desdits bords d'épaulements, et ladite extrémité libre (32) de la dite patte saillante sur ledit second panneau venant se disposer essentiellement à fleur avec ladite face opposée dudit second panneau.

2. Assemblage selon la revendication 1, dans lequel la configuration en section transversale de ladite patte saillante (21) épouse en général la forme de ladite fente d'insertion (11).

3. Assemblage selon la revendication 1 ou 2, dans lequel ledit second panneau comporte au moins deux pattes saillantes (43, 44) disposées essentiellement dans le même plan, et dans lequel ledit premier panneau comporte des fentes d'insertion correspondantes (41, 42) pratiquées dans ce dernier pour la réception desdites pattes au moins au nombre de deux.

4. Assemblage selon l'une quelconque des revendications précédentes, dans lequel ledit second panneau (2) est muni d'au moins un élément d'interconnexion pour la fixation mécanique dudit second panneau (2) audit premier panneau (1).

5. Assemblage selon la revendication 4, dans lequel ledit élément d'interconnexion comprend une portion angulaire (24) dudit second panneau (2) entourant partiellement ladite patte saillante (21).

6. Assemblage selon la revendication 5, dans lequel ledit second panneau (2) est fixé audit premier panneau (1) via des moyens de fixation (102) venant s'insérer dans la portion angulaire (24) et dans ledit premier panneau (1).

7. Assemblage selon l'une quelconque des revendications précédentes, dans lequel lesdits panneaux (1, 2) sont réalisés en tôle qui a été découpée ou matricée pour obtenir les configurations correctes de pattes et de fentes.

8. Assemblage selon la revendication 6, dans lequel une portion dudit second panneau a été découpée et pliée en dehors de son plan pour former ladite portion angulaire.

9. Assemblage selon la revendication 5, comprenant en outre une matière résiliente (101) disposée entre ledit premier panneau (1) et la portion angulaire (24) dudit second panneau (2).
